# EUROPEAN PATENT SPECIFICATION

(11) **EP 1 799 597 B1**
(45) Date of publication and mention of the grant of the patent: **07.01.2009**
(21) Application number: 05774014.4
(22) Date of filing: 25.08.2005
(51) Int. Cl.: B65G 21/20

(54) **ADJUSTABLE CONVEYOR GUIDE**
VERSTELLBARE FÜHRUNG FÜR FÖRDEREINRICHTUNG
GUIDAGE AJUSTABLE POUR CONVOYEUR

(30) Priority: 01.09.2004 GB 0419393
(43) Date of publication of application: 27.06.2007
(73) Proprietor: Zepf Technologies UK Limited, Cumbernauld G68 0EF (GB)
(72) Inventor: MCALLISTER, Mark, Clackmannanshire FK10 2GA (GB); POVEY, Timothy, Dunblane FK15 0LS (GB)
(74) Representative: McLeish, Nicholas Alistair Maxwell
(86) International application number: PCT/GB2005/003316
(87) International publication number: WO 2006/024830

(56) References cited:
- EP-A- 0 953 523
- FR-A- 2 544 292
- US-A- 5 322 160
- US-A- 5 492 218
- US-A- 5 533 826
- US-A- 5 682 976
- US-A- 5 782 339
- US-A- 6 003 662
- US-A- 6 050 396
- US-A1- 2003 205 447
- PATENT ABSTRACTS OF JAPAN vol. 016, no. 223 (M-1253), 25 May 1992 (1992-05-25) -& JP 04 041319 A (TOYO SEIKAN KAISHA LTD), 12 February 1992 (1992-02-12)
- PATENT ABSTRACTS OF JAPAN vol. 011, no. 183 (M-598), 12 June 1987 (1987-06-12) -& JP 62 012509 A (HITACHI ELECTRONICS ENG CO LTD), 21 January 1987 (1987-01-21)

## Description

This invention relates to an adjustable conveyor guide rail unit, in particular to a conveyor guide including one or more such guide rail units that may be adjusted to define a channel with varying discrete widths or of different discrete heights. The present invention has particular application in automated handling lines where containers, such as bottles, are processed (e.g. cleaned, filled, capped and/or labelled).

Automated handling lines usually comprise a number of machines, typically rotary handling machines, that fulfil various functions such as cleaning, assembling, filling, sealing or labelling an article. The articles are generally transported from machine to machine on automated conveyors. These conveyors typically comprise a moving floor, such as a conveyor belt.

One or more guide rails are employed to the sides of the conveyor path to ensure that articles follow any change in direction in the conveyor and to ensure that vibrations do not cause an article to topple. These guide rails (typically four, two to either side at different heights) are usually carried by guide rail units. Typically, a guide rail unit will be provided to either side of the conveyer path. For long sections of conveyor path, a series of guide rail units will line each side of the conveyor path. As conveyors often handle articles of differing sizes (e.g. a bottling line may handle bottles of varying sizes, both in width and height), it is advantageous for the conveyor guide rails to be adjustable. Such a provision is normally fulfilled by making the guide rail units removable, thus allowing them to be replaced by guide rail units with differently positioned guide rails.

However, this places a requirement for a range of differently-sized guide rail units to be made and also to be to hand, and the change-over operation is slow and time consuming. A known adjustable conveyor guide rail unit is shown, for example, in US 5 682 976.

Against this background, and from a first aspect, the present invention resides in an adjustable conveyor guide rail unit adapted for use in a conveyor guide to define the side of a channel through which an article may be conveyed, wherein the guide rail unit comprises a guide member operable to be set in a plurality of discrete positions relative to the channel as a whole, thereby allowing the width of the channel to be varied, and wherein the guide member is coupled to a mount that includes a rotable spider mounted on a shaft, the spider having a plurality of legs of different lengths relative to the shaft, and being rotatable about the shaft to present a leg to a co-operating recess provided in the adjustable guide member so as to set the guide member in the plurality of positions.

Such an assembly is advantageous as it allows the width of the channel to be varied without requiring the time-consuming removal of parts, followed by replacement with other parts. Moreover, the provision of discrete positions allows a simple and quick to operate mechanism to be employed. By discrete positions, it is meant that a plurality of predetermined positions are available to be selected by a user. This is in contrast to the often more complex mechanisms employed in the prior art that allow a user to set any position within a range but that are time-consuming to operate.

The spider arrangement provides a simple way of operating the assembly. To adjust the channel to handle an article of different width, an operator need only rotate the spider to set the guide member at a different position. The spider may optionally be removably mounted on the shaft. A spring detent grub screw may optionally be provided to allow rapid adjustment of the spider between positions yet still firmly secure the spider into the correct positions. In addition, it allows spiders to be removed and replaced with similar spiders rapidly.

The spider may comprise legs of different length radiating from a body having a central hole sized to receive the shaft. Alternatively, the legs may be of the same length radiating from a body having an eccentrically positioned hole sized to receive the shaft.

Optionally, the spider comprises at least three mutually orthogonal legs of different lengths. Four legs may be provided to be mutually orthogonal, although more than four legs may be provided if arranged on two levels. In this latter arrangement, the spider may simply be flipped over to access either level, the legs being mutually orthogonal to the other legs in its level in a preferred arrangement. Other arrangements are possible, e.g. two legs 180° apart.

Preferably, the guide rail unit further comprises a second spider like the first spider and wherein the guide member has a second recess for receiving a leg of the second spider. This is advantageous where a single guide rail unit is employed per side of the channel or where unlinked guide rail units are used, as it provides two points of contact that support the guide member in position, thereby providing more accurate positioning. Optionally, one or more slots may be provided in the guide member to receive a correspondingly sized post, thereby constraining movement of the guide member. For example, the slot may extend laterally: this allows an operator to slide the guide member to vary the width of the channel, thereby disengaging the spider's leg from the recess and allowing rotation of the spider. The guide member can then be slid back such that the new leg is received within the recess. The different length of the leg will stop the guide member at a different position, thereby setting a different width of the channel. The guide member may optionally be set in position by clamping means. Conveniently, the clamping means may be mounted on the post extending through the slot in the guide member. For example, the clamping means may comprise a threaded thumb wheel mounted on a threaded post, thus allowing the guide member to be clamped in position by turning the thumb wheel.

Optionally, the guide rail unit may be used with a second, like guide rail unit that comprises a further guide member coupled to a further mount, wherein respective mounts are connected to a base, at least one of the mounts being connected via a spacer such that it is at a different height to the other mount. This allows the guide members to be set to different heights. Where two like guide rail units are used together, providing spacers of varying height for each guide member allows the guide members to be set to a desired height independently of one another.

Preferably, the guide rail unit further comprises a second guide member disposed above the first guide member. Advantageously, this allows articles to be supported at two different heights thereby reducing the likelihood of an article toppling over. The second guide member need not be directly above the first. For example, the second guide member may be set inwardly of the first. This may be advantageous (particularly when used in conjunction with a second like guide rail unit that faces the first across the channel) for example, when bottles with slender necks are being conveyed: the first guide member may be set to support the wide body of the bottle, whereas the second may be set to support the narrower neck of the bottle. Providing guide members of different widths would allow this whilst still conveniently allowing them to be mounted to supports provided by the lower guide member.

Optionally, the second guide member is mounted on at least one support attached to the first guide member disposed therebelow. This is convenient because the support will move with the guide member beneath it. Thus, the guide members move in unison when their positions are adjusted by rotation of the spider or spiders. Where slots are provided in the first guide member to receive a post, a slot may be positioned in the second guide member to receive the same post.

Preferably, the at least one support is configured to mount the second guide member in a plurality of discrete positions. Optionally, the support extends upwardly and the guide member has an associated height setting means that co-operates with an upper portion of the support thereby mounting the guide member on the support at the plurality of discrete positions. This presents the height setting means towards or at the top of the conveyor guide rail unit such that it may be operated easily. The height setting means are thus readily accessible and it is easy to see at what height the second guide member is being set. Optionally, the height setting means are provided on an upper surface of the guide member.

Advantageously, the height setting means may be operated with one hand. This may be achieved in a number of ways. For example, the at least one supports may comprise a plurality of narrowed portions and the height setting means may contain a moveable part arranged to be received within the narrowed positions thereby defining a plurality of mounting positions of the second guide member at different heights. Again, this corresponds to a simple arrangement that allows rapid adjustment of the height of the second guide member. Any number of narrowed portions may be provided on each of the at least one supports, although four is currently preferred. To allow greater range of adjustment, other supports may be provided with narrowed portions provided at different levels. The height setting means may comprise a collar sized and shaped to receive the support. Optionally, the collar is provided with a button that, when actuated, causes the moving part to move into and out of the narrowed portion. Thus, one-handed operation is conveniently effected.

The invention also extends to a conveyor guide including one or more such guide rail units. For example, the conveyor guide may comprise a channel through which articles may be conveyed, wherein a first side of the channel is defined at least in part by a plurality of any of the guide rail units described above. Advantageously, an adjacent pair of the plurality of guide rail units may be coupled together.

Optionally, the guide members of the adjacent pair of guide rail units are coupled together such that movement of one guide member causes a corresponding movement of the other guide member. Either alternatively or additionally, the second guide members of the adjacent pair of guide rail units may be coupled together such that movement of one second guide member causes a corresponding movement of the other second guide member. Either of these arrangements are convenient in that moving one guide rail or second guide rail ensures that adjacent guide rails move in unison. Thus, setting the position of one guide rail automatically sets the position of all other guide rails.

Preferably, the adjacent guide rail units are coupled by interlocking formations, such as substantially jigsaw shaped projections. Optionally, the conveyor guide further comprises a member that overlaps the interlocking formations and that extends from one of guide rail unit of the adjacent pair to be received in a recess provided in the other guide rail unit of the adjacent pair. This stops relative movement in the direction transverse to that prevented by the jigsaw shaped projections.

When using adjacent, coupled guide rail units, it may be preferable for each of the plurality of guide rail units to have only one spider and only one co-operating recess. In addition, it may be preferable for each of the plurality of guide rail units to have only one clamping means. This is because positioning and guidance of the guide rails as they move may be performed by the collective action of the plurality of spiders and clamping means.

From a second aspect, the present invention resides in a method of adjusting a conveyor guide assembly as set forth in the appended claims.

In order that the invention can be more readily understood, reference will now be made by way of example only, to the accompanying drawings in which:-
Figure 1 is a perspective view of a conveyor guide according to the present invention from above and to one side;
Figure 2 corresponds to Figure 1 but with some parts removed to allow others to be seen;
Figure 3a is a view taken along arrow A of Figure 1, Figures 3b and 3c are sections through lines B-B and C-C respectively of Figure 1, and Figure 3d and 3e are sections through lines D-D and E-E respectively of Figure 2;
Figure 4 is a plan view of one of the spiders of Figure 1;
Figure 5 is a side view of one of the pillars of Figure 1;
Figure 6 is a perspective view of a conveyor guide comprising a series of guide rail units on each side;
Figure 7 is a plan view of the conveyor guide of Figure 6;
Figure 8 is a detail from Figure 7, showing some parts ghosted;
Figure 9 is a perspective view of an end of a lower guide rail; and
Figure 10 is a perspective view of an end of a guide rail unit.

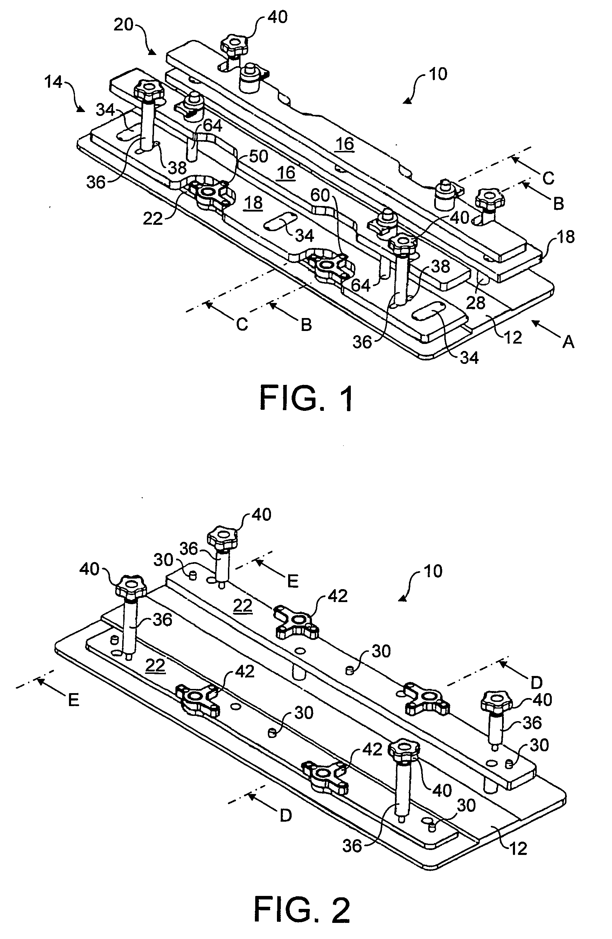

A conveyor guide 10 is shown in Figure 1, although mounted to a plain base plate 12. The plain base plate 12 is flat, save for a stepped plateau extending along its centre. In normal use, the conveyor guide is likely to be mounted on either side of a conveyor belt or the like. The conveyor guide 10 defines a short straight channel, although the channel could be of any length and could define a curved or kinked path.

The conveyor guide 10 comprises a pair of guide rail units 14, each unit 14 comprising an upper guide rail 16 and a lower guide rail 18. The guide rails 16, 18 are platelike and are arranged to define a channel 20 that extends along the length of the conveyor guide 10. The guide rail units 14 face each other with their inner edges providing contact surfaces that support an article conveyed along the conveyor 10. The two units 14 broadly correspond and as a result, the following description can be taken to refer to either unit 14, unless noted otherwise. The method of mounting both of the guide rail units 14 to the base plate 12 will now be described.

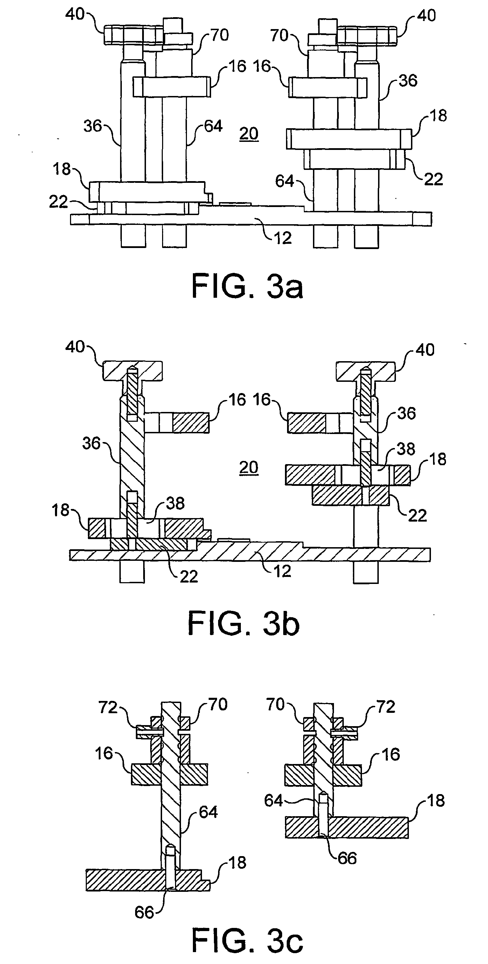

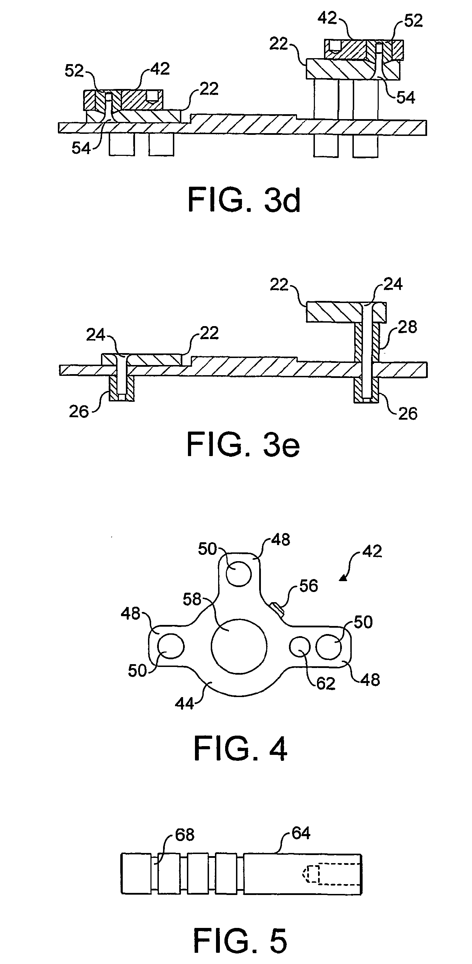

A flat core plate 22 is fastened to the base plate 12, as best shown in Figure 3e. The core plate 22 is fastened by a pair of screws 24, each of which passes through a hole provided in the core plate 22 to fasten against a screw thread provided on a mounting foot 26. One of the core plates 22 is fastened in this manner to lie flat against the base plate 12. However, the other core plate 22 is separated from the base plate 12 by spacers 28 that are provided with holes that receive screws 24. Thus, the core plates 22 reside at different heights.

The lower guide rail 18 couples to the core plate 22 such that the lower guide rail 18 can slide laterally to define a varying width of the channel 20. This lateral movement is constrained by five complementary slot and post arrangements, each comprising a post of circular cross-section received within a slot elongated in the lateral direction. Three of these slot and post arrangements comprise a screw 30 that projects through the core plate 22 to be received within a slot 32. Covers 34 are provided for the slots 32, as best seen in Figure 1. The remaining two post and slot arrangements are provided by shafts 36 that pass through slots 38 provided in the lower guide rail 18 and upon which a thumb wheel 40 is provided. The shaft 36 has a narrowed portion that passes through the slot 38 that is stepped to an enlarged portion to present a shoulder that abuts against the lower guide rail 18. The thumb wheel 40 may be turned to urge the shoulder of the shaft 36 against the lower guide rail 18 and clamp the lower guide rail 18 in position.

The position of the lower guide rail 18 is easily set in one of three indexed positions as follows. A pair of spiders 42 are provided for each lower guide rail 18, as best seen in Figure 4. The spider 42 generally comprises an annular body 44 with a central aperture 46, and three legs 48 of varying lengths extending radially from the body 44 at 90° intervals. Each leg 48 is identifiable by a coloured spot 50, a particular spot 50 being associated with a particular length of leg 48. All spiders 42 mounted on the unit 14 at any one time correspond and so each has the same colour spots 50.

Each spider 42 is rotatably mounted on a shaft 52 that is held in position by a screw 54 that projects through the core plate 22. Each spider 42 is provided with a spring detent grub screw 56 that has a rounded tip 58 that projects into the central aperture 46 of the spider 42. Each shaft 52 is provided with three dimples (not shown) that receive the rounded tip 58 of the grub screw 56. Thus, to move the spider 42 some force is required to overcome the spring of the grub screw 56, but the spiders 42 can then be rotated to a new position or lifted off the shaft 52. Resistance will be felt when each spider 42 reaches the next position when the rounded tip 58 is received in the next dimple, thus providing indexed positioning that corresponds to each leg 48 being aligned laterally.

The lower guide rail 18 is positioned by sliding it laterally such that the laterally extending legs 48 are received within slots 60 provided in the lower guide rail 18. The lower guide rail 18 is slid until the legs 48 touch the back of the slot 60 and then the thumb wheels 40 are turned to clamp the lower guide rail 18 into position. Rotating the spiders 42 allows three different positions to be selected, the varying lengths of the legs 48 ensuring channels 20 of varying widths are formed.

The spring detent grub screw 56 also allows the spiders 42 to be lifted off their shafts 52 easily and replaced with another set of spiders 42 with different leg lengths. The different sets of spiders 42 may be identified by using different colours for the spots 50, or by providing a further colour-coded spot 62, as shown in Figure 4.

The lateral position of the upper guide rail 16 is adjusted in unison with the lateral position of the lower guide rail 18 because the upper guide rail 16 is attached to pillars 64 that are in turn attached to the lower guide rail : 18 by screws 66. A pillar 64 is shown in more detail in Figure 5, where it can be seen that its upper portion is provided with four equispaced, narrowed rings 68, the purpose of which will be described below.

The upper guide rail 16 has a pair of apertures sized to receive the pillars 64. The upper guide rail 16 has a collar 70 extending above each aperture that surrounds the pillar 64 when mounted thereon and contains a spring button 72 that operates an element that projects into the collar 70 to engage in a ring 68 of the pillar 64, thereby securing the upper guide rail 16 at a desired height. The button 72 may be pressed to release the element from the ring 68, such that the upper guide rail 16 may be moved to a new height and fixed in position by allowing the element to engage in a new ring 68. This simple design allows quick and convenient adjustment. The adjustment mechanism (the button 72) is provided at the top of the pillar 64 and so is easy to access. In particular, this allows a user to work the height adjustment mechanism using only one hand: the collar 70 and bottom 72 may be squeezed between finger and thumb and the upper guide rail 16 either lifted or dropped into the desired position.

The upper guide rails 16 in this embodiment are intended to reside at the same heights. As the height of the lower guide rails 18 are different, pillars 64 of correspondingly different heights are used for each of the guide rail units 14. The pillars 64 are interchangeable to allow a greater range of heights of the upper guide rails 16, 18.

Hence, the conveyor guide 10 comprises guide rails 16, 18 that are adjustable in both lateral and vertical directions. Lateral adjustment of upper 16 and lower 18 guide rails is performed using the spiders 42 that provide three indexed positions for each guide rail pair 16, 18. Although different combinations of leg lengths could be used for each guide rail unit 14, it is currently envisaged that the same leg length will be used for each guide rail unit 14 as this preserves a common centre line of the channel 20. Vertical adjustment may be effected separately for upper 16 and lower guide rails 18. The height of the lower guide rails 18 may be adjusted using spacers 28 of varying heights to create a variable offset of core plate 22 from base plate 12. The height of the upper guide rails 16 may be adjusted by varying the mounting position between the four narrowed rings 68 provided on the pillars 64.

A skilled person will appreciate that the above embodiment may be varied in many different respects without departing from the scope of the present invention.

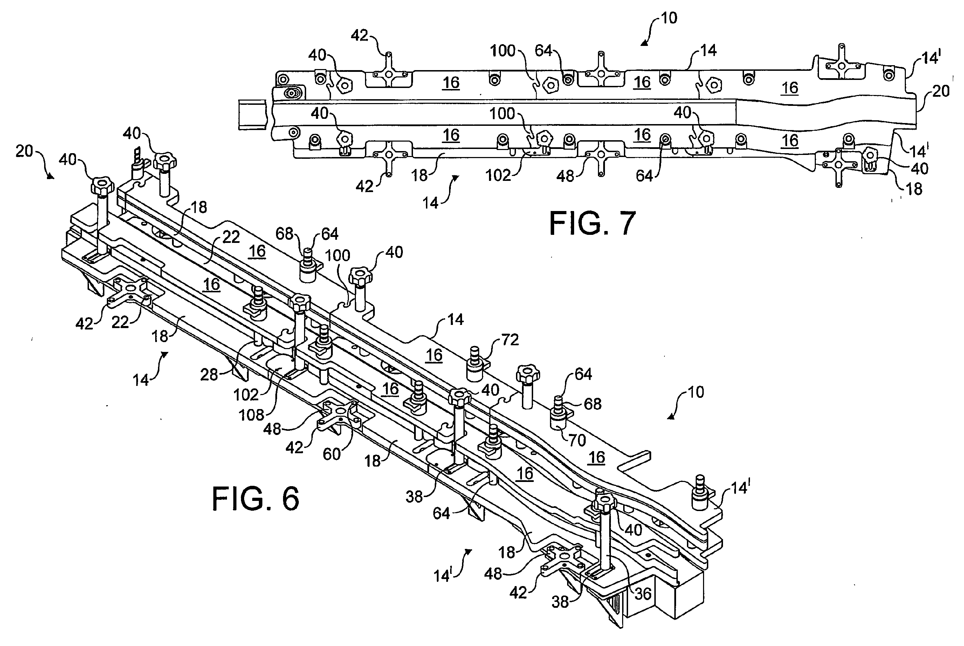

The Figures show a channel 20 defined by a pair of guide rail units 14. However, this need not be the case; the channel 20 may be defined by more or fewer guide rail units 14. For example, a single guide rail unit 14 akin to one of those shown in the Figures may define one side of a channel 20 whereas the other side of the channel 20 may be defined by a feed screw that is rotated to pitch containers along the conveyor guide 10. Alternatively, each side of a channel 20 may comprise more than a single guide rail unit 14, as a series of two or more similar or different guide rail units 14 for example, such as that shown in Figures 6 and 7.

Figures 6 and 7 show a conveyor guide 10 comprising a series of guide rail units 14 arranged along either side of a channel 20. Each guide rail unit 14 is broadly similar to those described above with respect to Figures 1 to 5. Thus, the following description concentrates on the differences in the guide rail units 14 rather than unnecessarily repeating description of like parts.

As best seen from Figures 6 and 7, the guide rail units 14 are linked by co-operating jigsaw cut-outs 100. The jigsaw cut-outs 100 are provided at either end of the guide rail units 14, both in each upper guide rail 16 and each lower guide rail 18. The jigsaw cut-outs 100 allow the series of guide rail units 14 to be assembled such that each unit 14 adopts its correct position. Moreover, providing the jigsaw cut-outs 100 in the guide rails 16 and 18 ensures that all the guide rails 16 and 18 move together as they are adjusted. Providing the jigsaw cut-outs 100 in both the lower guide rails 18 and the upper guide rails 16 is not strictly necessary as the upper guide rails 16 are mounted on the lower guide rails 18 thereby ensuring they move together. Hence, the jigsaw cut-outs 100 need only be provided in either upper or lower guide rails 16, 18. Providing jigsaw cut-outs 100 in both ensures better alignment of both upper and lower guide rails 16, 18 though.

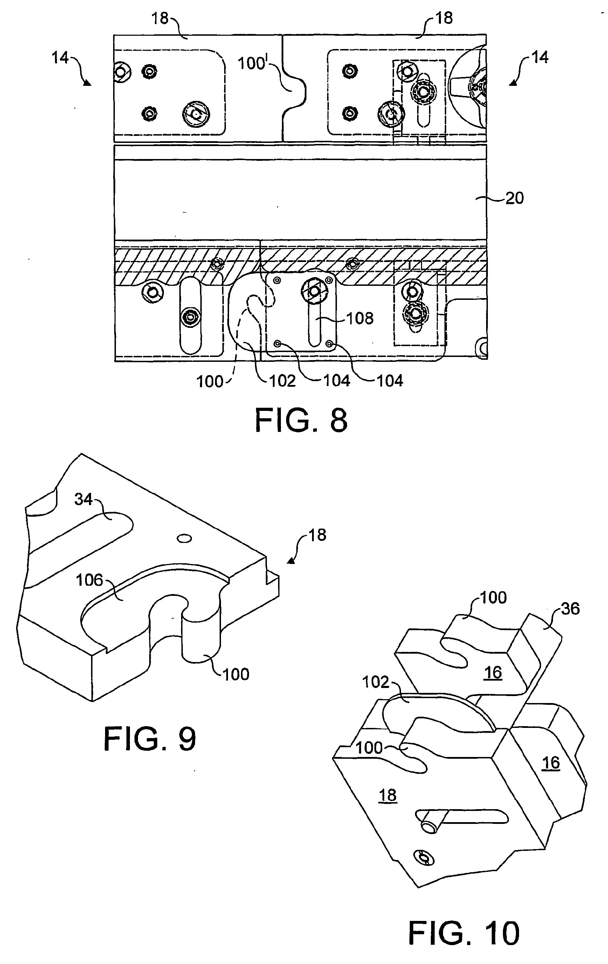

As the guide rails 16 and 18 move in unison, it is no longer advantageous to include two spiders 42 per guide rail unit 14. Instead only a single spider 42 is provided per guide rail unit 14: the alignment and correct positioning of the guide rails 16 and 18 is ensured by the spiders 42 of the many guide rail units 14 acting collectively. Similarly, only a single shaft 36 and thumb wheel 40 is provided per guide rail unit 14 to provide a clamping means for securing the guide rail units 14 firmly in place. This reduction in parts will lead to reduced guidance for each guide rail unit 14: however, the collective action of all shaft 36 and slot 38 pairs across the series of guide rail units 14 ensures sufficient guidance is provided during adjustment of the guide rails 16 and 18. Figures 8, 9 and 10 illustrate a further feature present in the conveyor guide 10 of Figures 6 and 7 that assists correct coupling of adjacent guide rail units 14. Figure 8 best shows a clamp plate 102 that is attached to the left of a lower guide rail 18 by four screws 104. The clamp plate 102 projects beyond the left edge of the lower guide rail 18 across the area presented by the top of jigsaw cut-out 100. The right part of each lower guide rail 18 is provided with a recess 106 sized and shaped to receive the projecting section of the clamp plate 102. The shaft 36 attached to thumb wheel 40 projects through clamp plate 102 as it passes through lower guide rail 18 to fix to core plate 22. Hence, clamp plate 102 is provided with an aperture 108 that, when assembled, lies in registration with the slot 38 provided in lower guide rail 18. The shoulder provided in shaft 36 abuts against the clamp plate 102 and so bears against the clamp plate 102 when the thumb wheel 40 is tightened. The projecting clamp plates 102 are provided to prevent one lower guide rail 18 (and, hence the entire guide rail unit 14) lifting up relative to its neighbour.

The width of the channel 20 may be varied by adjusting the lateral positions of the guide rails 16 and 18 as follows. The thumb wheel 40 on each guide rail unit 14 along the length of conveyor guide 10 is loosened and the guide rails 16 and 18 slid into the channel 20, as guided by the slot and post combinations (30 and 32, and 36 and 38). Moving one guide rail 16 or 18 will see all other guide rails 16 and 18 move in unison. This allows the spiders 42 to be rotated to present another of the four different length legs 48 to the slot 60 provided in the lower guide rail 18 (or, the spider 42 may be replaced by another spider 42). As before, the lengths of legs 48 are colour-coded. The same length of leg 48 should be selected for all spiders 42 on the same side of the conveyor guide 10 (and, preferably, the same length of leg 48 should be selected for both sides). With each spider 42 set in position, the guide rails 16 and 18 may be moved back in unison such that each spider's leg 48 is received in the associated slot 60 parallel in the lower guide rails 18 such that the spiders can stop the guide rails 16 and 18 at the correct position. The thumb wheels 40 are then tightened to secure the guide-rails 16 and 18 in place.

As will be appreciated, the height adjustment of the guide rails 16 and 18 is performed as previously described, i.e. with the use of spacers 28 for the lower guide rails 18 and with the use of the narrowed rings 68 provided on the pillars 64 for the upper guide rails 16.

The shape of the jigsaw cut-outs 100 is not critical provided they serve the function of guiding adjacent guide rail units 14 into alignment. The interlocking formations 100 of Figure 7 may be replaced by many other designs, both interlocking and otherwise. An alternative is shown at 100' of Figure 8. Moreover, the use of clamp plates 102 is optional and may be omitted, for example where lifting of guide rail units 14 is not envisaged or may be tolerated.

Other variations to the embodiments described above are possible without departing from the scope of the invention defined by the claims. For example, not all guide rail units 14 need be height and/or width adjustable. For example, only one side of a channel 20 need be provided with a width-adjustable guide rail unit 14 to allow variation of the width of the channel 20. The other side of the channel 20 may have a guide rail unit 14 that is neither height nor width adjustable. However, it is preferred to provide width-adjustable guide rail units 14 on both sides of the channel 20 because this allows the width of the channel 20 to be adjusted while preserving the position of its centre line. A guide rail unit 14 within a conveyor guide 10 may be width-adjustable and/or height adjustable and a conveyor guide 10 may comprise any combination of such guide rail units 14 and also further include non-adjustable guide rail units 14.

The above embodiment describes a conveyor guide 10 that defines a straight path. This need not be the case: the conveyor guide 10 may define a curved or kinked channel 20. An example of a curved path is shown in Figures 6 and 7 where the rightmost guide rail units 14' define a meandering channel 20. These Figures also show that straight and curved guide rail units 14 and 14' can be freely mixed to define a required path. As can be seen from Figures 6 and 7, curved guide rail units 14' correspond to the other straight guide rail units 14, save for the shape of the channel 20 they define. The dimensions of the conveyor guide 10 may be freely varied to suit needs. A currently preferred application is for use in an automated bottling line, where bottles with capacities from, for example, 250ml to 21 may be conveyed.

How the articles are to be conveyed is also a matter of choice. The articles may be conveyed through the conveyor guide 10 by a belt that supports the articles from below, by a carrier that grips the articles from above (e.g. that grips the necks of bottles), or by rotating rollers disposed periodically along a conveyor line or a feed screw that imparts motion to articles that contact them as they pass by.

The above embodiment comprises four guide rails 16, 18, the upper of which 16 are at a common height and the lower of which 18 are at different heights. Other numbers of guide rails may be used to define the channel 20, e.g. 3, 5, 6, etc. Of course, each guide rail unit 14 need not carry the same number of guide rails 16, 18. The height of each guide rail 16, 18 may be freely chosen.

The guide rails 16, 18 shown in the accompanying Figures are thin with little depth. However, the depth of the guide rails may be freely chosen. For example, each guide rail unit 14 may carry a single deep guide rail 16, 18 for supporting a straight-sided bottle or the like. The widths of the guide rails 16, 18 may also be varied. This would allow the width of the channel 20 to vary with height, e.g. it may be narrower at the top to correspond to the narrowest neck of a bottle.

Whilst three-legged spiders 42 are shown in the Figures, the number of legs may be freely chosen and arranged as desired, as described above. Also, the number of spiders 42 per guide rail unit 14 may be varied.

The manner in which the guide rails 16, 18 are held in position can also be freely chosen: the clamping means provided by the thumb wheels 40 for the lower guide rails 18 and the push button mechanism 72 for the upper guide rails 16 are but merely described for the purposes of illustration. The number of narrowed rings 68 provided in the pillars 64, along with their positions, may also be varied. The inclusion of core plates 22 is also optional. For example, the shafts 52 about which the spiders 42 rotate may be attached directly to the base plate 12 where the lower guide rails 18 are to be positioned immediately above the base plate 12.

## Claims

1. An adjustable conveyor guide rail unit (14) adapted for use in a conveyor guide (10) to define the side of a channel (20) through which an article may be conveyed, the guide rail unit comprising a guide member (16,18) operable to be set in a plurality of discrete positions relative to the channel as a whole, thereby allowing the width of the channel to be varied, and **characterised in that** the guide member is coupled to a mount (12) that includes a rotatable spider (42) mounted on a shaft (52), the spider having a plurality of legs (48) of different lengths relative to the shaft, and being rotatable about the shaft to present a leg to a co-operating recess (60) provided in the adjustable guide member so as to set the guide member in the plurality of positions.

2. The guide rail unit of Claim 1, wherein the spider is removably mounted on the shaft.

3. The guide rail unit of Claim 1 or Claim 2, wherein the spider comprises a spring detent grub screw operable to set the spider in position.

4. The guide rail unit of any of Claims 1 to 3, wherein the spider comprises at least three mutually orthogonal legs of different lengths.

5. The guide rail unit of any of Claims 1 to 4, further comprising a second spider (42) like the first spider and wherein the guide member has a second recess (60) for receiving a leg (48) of the second spider.

6. The guide rail unit of any preceding claim, further comprising clamping means (36,40) for clamping the guide member in position.

7. The guide rail unit of Claim 6, wherein the clamping means comprise a thumbwheel (40) operable to clamp the guide member.

8. The guide rail unit of Claim 6 or Claim 7, further comprising a second like clamping means (36,40).

9. The guide rail unit of any preceding claim, further comprising a second guide member (16) disposed above the first guide member (18).

10. The guide rail unit of Claim 9, wherein the second guide member is mounted on at least one support (64) attached to the first guide member and disposed therebelow.

11. The guide rail unit of Claim 10, wherein the second guide member is adapted to be mounted on the at least one support in a plurality of discrete positions.

12. The guide rail unit of Claim 11, wherein the support extends upwardly and the second guide member has an associated height setting means (70,72) that co-operates with an upper portion of the at least one support thereby mounting the second guide member on the at least one support at the plurality of discrete positions.

13. The guide rail unit of Claim 12, wherein the height setting means are provided on an upper surface of the second guide member.

14. The guide rail unit of Claim 13, wherein the height setting means may be operated with one hand.

15. The guide rail unit of any of Claims 11 to 14, wherein the at least one support comprises a plurality of narrowed portions (68) and the second guide member contains a movable part (72) to be received within the narrowed portions thereby defining a plurality of mounting positions of the second guide member at different heights.

16. The guide rail unit of Claim 15, wherein the height setting means comprises a collar (76) sized and shaped to receive the support.

17. The guide rail unit of Claim 16, wherein the collar is provided with a button (72) that, when actuated, causes the moving part to move into and out of the narrowed portion.

18. The guide rail unit of any preceding claim, comprising coupling means (100) located so as to allow the guide rail unit to be coupled to co-operating coupling means provided on an adjacent, like guide rail unit (14).

19. The guide rail unit of Claim 18, wherein the coupling means is provided to couple the guide member to the guide member of the adjacent guide rail unit such that movement of one guide member causes a corresponding movement of the adjacent guide member.

20. The guide rail unit of Claim 18 or Claim 19 when either is dependent upon Claim 9, wherein the coupling means is provided to couple the second guide member to the second guide member of the adjacent guide rail unit such that movement of one second guide member causes a corresponding movement of the adjacent second guide member.

21. The guide rail unit of any of Claims 18 to 20, wherein the coupling means is shaped to form an interlocking formation (100) with corresponding coupling means of the adjacent guide rail unit.

22. The guide unit of Claim 21, wherein the interlocking formation is substantially jigsaw shaped.

23. The guide rail unit of Claim 21 or Claim 22, further comprising a member (102) that extends from one side of the guide rail unit and a recess (106) provided in the other side of the guide rail unit shaped to receive a like member.

24. The guide rail unit of Claim 23, wherein the member overlaps the interlocking formation.

25. A conveyor guide (10) including the conveyor guide rail unit (14) of any preceding claim.

26. A conveyor guide (10) comprising a channel (20) through which articles may be conveyed, a first side of the channel being defined at least in part by a guide rail unit (14) according to any of Claims 1 to 24, and a second side of the channel being defined at least in part by a further guide rail unit (14) according to any of Claims 1 to 24.

27. The conveyor guide of Claim 25 or Claim 26, comprising a channel through which articles may be conveyed, wherein a first side of the channel is defined at least in part by a plurality of guide rail units according to any of Claims 1 to 24.

28. The conveyor guide of Claim 27, wherein an adjacent pair of the plurality of guide rail units are coupled together.

29. The conveyor guide of Claim 28, wherein the guide members of the adjacent pair of guide rail units are coupled together such that movement of one guide member causes a corresponding movement of the other guide member.

30. The conveyor guide of Claim 28 or Claim 29 when either is dependent upon Claim 9, wherein the second guide members of the adjacent pair of guide rail units are coupled together such that movement of one second guide member causes a corresponding movement of the other second guide member.

31. The conveyor guide of any of Claims 28 to 30, wherein the adjacent guide rail units are coupled by interlocking formations.

32. The conveyor guide of Claim 31, wherein the interlocking formations are substantially jigsaw shaped.

33. The conveyor guide of Claim 31 or Claim 32, further comprising a member that extends from one of guide rail unit of the adjacent pair to be received in a recess provided in the other guide rail unit of the adjacent pair.

34. The conveyor guide of Claim 33, wherein the member overlaps the interlocking formations.

35. The conveyor guide of any of Claims 31 to 34, wherein each of the plurality of guide rail units has only one spider and only one co-operating recess.

36. The conveyor guide of any of Claims 27 to 35 when dependent upon Claim 6, wherein each of the plurality of guide rail units has only one clamping means.

37. A method of adjusting a conveyor guide (10) comprising a guide rail unit (14) including a guide member (16,18) arranged to define one side of a channel (20) through which an article may be conveyed, the method comprising changing the position of the guide member from a first position to a second position of a plurality of discrete positions relative to the guide rail unit as a whole, thereby adjusting the width of the channel; and **characterised in that** the guide rail unit comprises a rotatable spider (42) mounted on a shaft (52), the spider having a plurality of legs (48) of different lengths relative to the shaft, and the guide member having a slot (60) sized and positioned to receive a leg of the spider, the method further comprising the steps of: (i) moving the guide member to disengage the spider's leg from the slot; (ii) rotating the spider to present a different leg to the slot; and (iii) moving the guide member back into position such that the different leg is received within the slot.

## Patentansprüche

1. Eine verstellbare Förderbandführungsschieneneinheit (14), die für den Einsatz in einer Förderbandführung (10) zum Bestimmen der Seite eines Kanals (20) geeignet ist, durch den ein Artikel befördert wird, wobei die Führungsschieneneinheit ein Führungselement (16, 18) aufweist, welches in eine Vielzahl einzelner Stellungen bezüglich des Kanals als Ganzes versetzt werden kann, wodurch die Breite des Kanals variiert werden kann, und die **dadurch gekennzeichnet ist, dass** das Führungselement mit einer Halterung (12) verbunden ist, welche eine rotierbare Spinne (42), die an einer Welle (52) befestigt ist, aufweist, wobei die Spinne über eine Vielzahl von Schenkeln (48) mit unterschiedlichen Längen bezüglich der Welle verfügt und um die Welle rotierbar ist, so dass ein Schenkel einer kooperierenden Aussparung (60) präsentiert wird, die sich in dem verstellbaren Führungselement befindet, um das Führungselement in eine Vielzahl von Stellungen zu versetzen.

2. Führungsschieneneinheit nach Anspruch 1, wobei die Spinne demontierbar an der Welle befestigt ist.

3. Führungsschieneneinheit nach Anspruch 1 oder 2, wobei die Spinne einen Federrastergewindestift aufweist, der dazu dient, die Spinne in einer Stellung zu fixieren.

4. Führungsschieneneinheit nach einem der Ansprüche 1 bis 3, wobei die Spinne mindestens drei rechtwinklig zueinander stehende Schenkel unterschiedlicher Länge umfasst.

5. Führungsschieneneinheit nach einem der Ansprüche 1 bis 4, welche außerdem eine zweite Spinne (42) ähnlich der ersten Spinne umfasst und wobei das Führungselement eine zweite Aussparung (60) für die Aufnahme eines Schenkels (48) der zweiten Spinne aufweist.

6. Führungsschieneneinheit nach einem der vorstehenden Ansprüche, welche außerdem Klemmmittel (36, 40) zum Festklemmen des Führungselements in Position umfasst.

7. Führungsschieneneinheit nach Anspruch 6, wobei das Klemmmittel ein Rändelrad (40) umfasst, welches dazu dient, das Führungselement festzuklemmen.

8. Führungsschieneneinheit nach Anspruch 6 oder 7, welche außerdem ein zweites ähnliches Klemmmittel (36, 40) umfasst.

9. Führungsschieneneinheit nach einem der vorstehenden Ansprüche, welche außerdem ein zweites Führungselement (16) umfasst, das oberhalb des ersten Führungselements (18) angeordnet ist.

10. Führungsschieneneinheit nach Anspruch 9, wobei das zweite Führungselement an mindestens einer Stütze (64) montiert ist, die an dem ersten Führungselement befestigt und darunter angeordnet ist.

11. Führungsschieneneinheit nach Anspruch 10, wobei das zweite Führungselement angepasst wird, um es an der mindestens einen Stütze in einer Vielzahl von einzelnen Stellungen zu befestigen.

12. Führungsschieneneinheit nach Anspruch 11, wobei sich die Stütze aufwärts erstreckt und das zweite Führungselement ein zugehöriges Einstellmittel (70, 72) aufweist, welches mit einem oberen Anteil der mindestens einen Stütze zusammenwirkt, wodurch das zweite Führungselement an der mindestens einen Stütze in einer Vielzahl von einzelnen Stellungen befestigt wird.

13. Führungsschieneneinheit nach Anspruch 12, wobei sich die Höheneinstellmittel auf einer Oberseite des zweiten Führungselements befinden.

14. Führungsschieneneinheit nach Anspruch 13, wobei die Höheneinstellmittel mit einer Hand betätigt werden können.

15. Führungsschieneneinheit nach einem der Ansprüche 11 bis 14, wobei die mindestens eine Stütze eine Vielzahl verjüngter Anteile (68) umfasst und das zweite Führungselement einen beweglichen Teil (72) aufweist, der innerhalb der verjüngten Anteile aufgenommen wird, wodurch eine Vielzahl von Befestigungsstellungen des zweiten Führungselements in unterschiedlichen Höhen bestimmt wird.

16. Führungsschieneneinheit nach Anspruch 15, wobei das Höheneinstellmittel eine Manschette (76) in der Größe und Form zur Aufnahme der Stütze umfasst.

17. Führungsschieneneinheit nach Anspruch 16, wobei die Manschette mit einem Knopf (72) bereitgestellt wird, welcher, wenn betätigt, den beweglichen Teil dazu bringt, sich in den verjüngten Anteil hinein- und aus dem verjüngten Anteil herauszubewegen.

18. Führungsschieneneinheit nach einem der vorstehenden Ansprüche, die Kopplungsmittel (100) umfasst, die so angeordnet sind, dass sie es ermöglichen, die Führungsschieneneinheit mit einem kooperierenden Kopplungsmittel, welches sich an einer angrenzenden, ähnlichen Führungsschieneneinheit (14) befindet, zu koppeln.

19. Führungsschieneneinheit nach Anspruch 18, wobei das Kopplungsmittel bereitgestellt wird, um das Führungselement so mit dem Führungselement der angrenzenden Führungsschieneneinheit zu koppeln, dass die Bewegung eines Führungselements eine enstprechende Bewegung des angrenzenden Führungselements bewirkt.

20. Führungsschieneneinheit nach Anspruch 18 oder 19, wenn einer von beiden von Anspruch 9 abhängig ist, wobei das Kopplungsmittel bereitgestellt wird, um das zweite Führungselement so mit dem zweiten Führungselement der angrenzenden Führungschieneneinheit zu koppeln, dass die Bewegung eines zweiten Führungselements eine enstprechende Bewegung des angrenzenden zweiten Führungselements bewirkt.

21. Führungsschieneneinheit nach jedem der Ansprüche 18 bis 20, wobei das Kopplungsmittel so geformt ist, dass es eine ineinandergreifende Struktur (100) mit entsprechenden Kopplungsmitteln der angrenzenden Führungsschieneneinheit bildet.

22. Führungsschieneneinheit nach Anspruch 21, wobei die ineinandergreifende Struktur im Wesentlichen puzzleförmig ist.

23. Führungsschieneneinheit nach Anspruch 21 oder 22, welche außerdem ein Element (102), das sich von einer Seite der Führungsschieneneinheit her erstreckt, und eine Aussparung (106), die sich an der anderen Seite der Führungsschieneneinheit befindet und für die Aufnahme eines ähnlichen Elements entsprechend geformt ist, umfasst.

24. Führungsschieneneinheit nach Anspruch 23, wobei das Element die ineinandergreifende Struktur überlappt.

25. Eine Förderbandführung (10), die die Förderbandführungsschieneneinheit (14) nach jedem der vorstehenden Ansprüche aufweist.

26. Förderbandführung (10) die einen Kanal umfasst, durch den ein Artikel befördert werden kann, eine erste Seite des Kanals, die zumindest teilweise durch eine Führungsschieneneinheit (14) gemäß eines jeden der Ansprüche 1 bis 24 definiert wird, und eine zweite Seite des Kanals, die zumindest teilweise durch eine weitere Führungsschieneneinheit (14) gemäß eines jeden der Ansprüche 1 bis 24 definiert wird.

27. Förderbandführung nach Anspruch 25 oder 26, welche einen Kanal umfasst, durch den Artikel befördert werden können, wobei eine erste Seite des Kanals zumindest teilweise durch eine Vielzahl von Führungsschieneneinheiten gemäß eines jeden der Ansprüche 1 bis 24 definiert wird.

28. Förderbandführung nach Anspruch 27, wobei ein angrenzendes Paar der Vielzahl von Führungsschieneneinheiten zusammengekoppelt ist.

29. Förderbandführung nach Anspruch 28, wobei die Führungselemente des angrenzenden Paares von Führungsschieneneinheiten so zusammengekoppelt werden, dass die Bewegung eines Führungselements eine entsprechende Bewegung des anderen Führungselements bewirkt.

30. Förderbandführung nach Anspruch 28 oder 29, wenn einer von beiden von Anspruch 9 abhängig ist, wobei die zweiten Führungselemente des angrenzenden Paares von Führungsschieneneinheiten so zusammengekoppelt werden, dass die Bewegung eines zweiten Führungselements eine entsprechende Bewegung des anderen zweiten Führungselements bewirkt.

31. Förderbandführung nach einem der Ansprüche 28 bis 30, wobei die angrenzenden Führungsschieneneinheiten durch ineinandergreifende Strukturen gekoppelt werden.

32. Förderbandführung nach Anspruch 31, wobei die ineinandergreifenden Strukturen im Wesentlichen puzzleförmig sind.

33. Förderbandführung nach Anspruch 31 oder Anspruch 32, welche außerdem ein Element umfasst, das sich von einer Führungsschieneneinheit des angrenzenden Paares erstreckt, um in einer Aussparung, die sich in der anderen Führungsschieneneinheit des angrenzenden Paares befindet, aufgenommen zu werden.

34. Förderbandführung nach Anspruch 33, wobei das Element die ineinandergeifenden Sturkturen überlappt.

35. Förderbandführung nach einem der Ansprüche 31 bis 34, wobei jede aus der Vielzahl von Führungsschieneneinheiten lediglich eine Spinne und lediglich eine kooperierende Aussparung aufweist.

36. Förderbandführung nach einem der Ansprüche 27 bis 35, wenn von Anspruch 6 abhängig, wobei jede aus der Vielzahl von Führungsschieneneinheiten lediglich ein Klemmmittel aufweist.

37. Ein Verfahren zur Justierung einer Förderbandführung (10), die eine Führungsschieneneinheit (14) umfasst, welche ein Führungselement (16, 18) aufweist, das so angeordnet ist, dass es eine Seite eines Kanals (20) definiert, durch den ein Artikel befördert werden kann, wobei das Verfahren die Änderung der Stellung des Führungselements von einer ersten Stellung in eine zweite Stellung aus einer Vielzahl von einzelnen Stellungen bezüglich der Führungsschieneneinheit als Ganzes umfasst und welches **dadurch gekennzeichnet ist, dass** die Führungsschieneneinheit eine an einer Welle (52) montierte, rotierbare Spinne (42) umfasst, wobei die Spinne eine Vielzahl von Schenkeln (48) unterschiedlicher Länge bezüglich der Welle aufweist und das Führungselement eine Aussparung (60) in der Größe und Form zur Aufnahme eines Schenkels der Spinne aufweist, wobei das Verfahren außerdem die folgenden Schritte umfasst: (i) Bewegen des Führungselements, um den Spinnenschenkel aus der Aussparung zu lösen, (ii) Rotieren der Spinne, um der Aussparung einen anderen Schenkel entgegenzubringen und (iii) Bewegen des Führungselements zurück in Position, so dass der andere Schenkel in der Aussparung aufgenommen wird.

## Revendications

1. Unité de rail de guidage de convoyeur ajustable (14) adaptée pour une utilisation dans un guide de convoyeur (10) pour définir le côté d'un canal (20) à travers lequel un article peut être transporté, l'unité de rail de guidage comprenant un élément de guidage (16, 18) pouvant être actionné pour être placé à une pluralité de positions discrètes par rapport au canal dans son ensemble, permettant de ce fait de modifier la largeur du canal, et **caractérisée en ce que** l'élément de guidage est accouplé à un socle (12) qui comprend un croisillon rotatif (42) monté sur un arbre (52), le croisillon comportant une pluralité de pattes (48) de différentes longueurs par rapport à l'arbre, et étant capable de tourner autour de l'arbre pour présenter une patte à un évidement (60) coopérant prévu dans l'élément de guidage ajustable de manière à placer l'élément de guidage à la pluralité de positions.

2. Unité de rail de guidage selon la revendication 1, dans laquelle le croisillon est monté de manière amovible sur l'arbre.

3. Unité de rail de guidage selon la revendication 1 ou la revendication 2, dans laquelle le croisillon comprend une vis sans tête à cliquet à ressort pouvant être utilisée pour placer le croisillon en position.

4. Unité de rail de guidage selon l'une quelconque des revendications 1 à 3, dans laquelle le croisillon comprend au moins trois pattes mutuellement orthogonales de différentes longueurs.

5. Unité de rail de guidage selon l'une quelconque des revendications 1 à 4, comprenant en outre un deuxième croisillon (42) identique au premier croisillon, et dans laquelle l'élément de guidage comporte un deuxième évidement (60) pour recevoir une patte (48) du deuxième croisillon.

6. Unité de rail de guidage selon l'une quelconque des revendications précédentes, comprenant en outre des moyens de serrage (36, 40) pour serrer l'élément de guidage en position.

7. Unité de rail de guidage selon la revendication 6, dans laquelle les moyens de serrage comprennent une molette (40) pouvant être utilisée pour serrer l'élément de guidage.

8. Unité de rail de guidage selon la revendication 6 ou la revendication 7, comprenant en outre des deuxièmes moyens de serrage (36, 40) identiques.

9. Unité de rail de guidage selon l'une quelconque des revendications précédentes, comprenant en outre un deuxième élément de guidage (16) disposé au-dessus du premier élément de guidage (18).

10. Unité de rail de guidage selon la revendication 9, dans laquelle le deuxième élément de guidage est monté sur au moins un support (64) fixé au premier élément de guidage et disposé au-dessous de celui-ci.

11. Unité de rail de guidage selon la revendication 10, dans laquelle le deuxième élément de guidage est adapté pour être monté sur ledit au moins un support à une pluralité de positions discrètes.

12. Unité de rail de guidage selon la revendication 11, dans laquelle le support s'étend vers le haut et le deuxième élément de guidage comporte des moyens de fixation en hauteur (70, 72) associés qui coopèrent avec une partie supérieure dudit au moins un support, montant de ce fait le deuxième élément de guidage sur ledit au moins un support à la pluralité de positions discrètes.

13. Unité de rail de guidage selon la revendication 12, dans laquelle les moyens de fixation en hauteur sont prévus sur une surface supérieure du deuxième élément de guidage.

14. Unité de rail de guidage selon la revendication 13, dans laquelle les moyens de fixation en hauteur peuvent être actionnés d'une seule main.

15. Unité de rail de guidage selon l'une quelconque des revendications 11 à 14, dans laquelle ledit au moins un support comprend une pluralité de parties rétrécies (68) et le deuxième élément de guidage contient une partie mobile (72) destinée à être reçue dans les parties rétrécies, définissant de ce fait une pluralité de positions de montage du deuxième élément de guidage à différentes hauteurs.

16. Unité de rail de guidage selon la revendication 15, dans laquelle les moyens de fixation en hauteur comprennent un collier (76) dimensionné et formé pour recevoir le support.

17. Unité de rail de guidage selon la revendication 16, dans laquelle le collier est pourvu d'un bouton (72) qui, lorsqu'il est actionné, amène la partie mobile à se déplacer dans et hors de la partie rétrécie.

18. Unité de rail de guidage selon l'une quelconque des revendications précédentes, comprenant des moyens d'accouplement (100) positionnés de manière à permettre l'accouplement de l'unité de rail de guidage à des moyens d'accouplement coopérants prévus sur une unité de rail de guidage (14) identique adjacente.

19. Unité de rail de guidage selon la revendication 18, dans laquelle les moyens d'accouplement sont prévus pour accoupler l'élément de guidage à l'élément de guidage de l'unité de rail de guidage adjacente de sorte qu'un mouvement d'un élément de guidage entraîne un mouvement correspondant de l'élément de guidage adjacent.

20. Unité de rail de guidage selon la revendication 18 ou la revendication 19 lorsque l'une ou l'autre dépend de la revendication 9, dans laquelle les moyens d'accouplement sont prévus pour accoupler le deuxième élément de guidage au deuxième élément de guidage de l'unité de rail de guidage adjacente de sorte qu'un mouvement d'un deuxième élément de guidage entraîne un mouvement correspondant du deuxième élément de guidage adjacent.

21. Unité de rail de guidage selon l'une quelconque des revendications 18 à 20, dans laquelle les moyens d'accouplement sont formés pour former une formation de verrouillage (100) avec des moyens d'accouplement correspondants de l'unité de rail de guidage adjacente.

22. Unité de guidage selon la revendication 21, dans laquelle la formation de verrouillage est sensiblement en forme de scie sauteuse.

23. Unité de rail de guidage selon la revendication 21 ou la revendication 22, comprenant en outre un élément (102) qui s'étend d'un côté de l'unité de rail de guidage et un évidement (106) prévu dans l'autre côté de l'unité de rail de guidage formé pour recevoir un élément identique.

24. Unité de rail de guidage selon la revendication 23, dans laquelle l'élément recouvre la formation de verrouillage.

25. Guide de convoyeur (10) comprenant l'unité de rail de guidage de convoyeur (14) selon l'une quelconque des revendications précédentes.

26. Guide de convoyeur (10) comprenant un canal (20) à travers lequel des articles peuvent être transportés, un premier côté du canal étant défini au moins en partie par une unité de rail de guidage (14) selon l'une quelconque des revendications 1 à 24, et un deuxième côté du canal étant défini au moins en partie par une autre unité de rail de guidage (14) selon l'une quelconque des revendications 1 à 24.

27. Guide de convoyeur selon la revendication 25 ou la revendication 26, comprenant un canal à travers lequel des articles peuvent être transportés, dans lequel un premier côté du canal est défini au moins en partie par une pluralité d'unités de rail de guidage selon l'une quelconque des revendications 1 à 24.

28. Guide de convoyeur selon la revendication 27, dans lequel deux unités adjacentes de la pluralité d'unités de rail de guidage sont accouplées l'une à l'autre.

29. Guide de convoyeur selon la revendication 28, dans lequel les éléments de guidage des deux unités adjacentes des unités de rail de guidage sont accouplés l'un à l'autre de sorte qu'un mouvement d'un élément de guidage entraîne un mouvement correspondant de l'autre élément de guidage.

30. Guide de convoyeur selon la revendication 28 ou la revendication 29 lorsque l'une ou l'autre dépend de la revendication 9, dans lequel les deuxièmes éléments de guidage des deux unités adjacentes des unités de rail de guidage sont accouplés l'un à l'autre de sorte qu'un mouvement d'un deuxième élément de guidage entraîne un mouvement correspondant de l'autre deuxième élément de guidage.

31. Guide de convoyeur selon l'une quelconque des revendications 28 à 30, dans lequel les unités de rail de guidage adjacentes sont accouplées par des formations de verrouillage.

32. Guide de convoyeur selon la revendication 31, dans lequel les formations de verrouillage sont sensiblement en forme de scie sauteuse.

33. Guide de convoyeur selon la revendication 31 ou la revendication 32, comprenant en outre un élément qui s'étend d'une unité de rail de guidage des deux unités adjacentes pour être reçu dans un évidement prévu dans l'autre unité de rail de guidage des deux unités adjacentes.

34. Guide de convoyeur selon la revendication 33, dans lequel l'élément recouvre les formations de verrouillage.

35. Guide de convoyeur selon l'une quelconque des revendications 31 à 34, dans lequel chacune de la pluralité d'unités de rail de guidage comporte un seul croisillon et un seul évidement coopérant.

36. Guide de convoyeur selon l'une quelconque des revendications 27 à 35 lorsqu'elles dépendent de la revendication 6, dans lequel chacune de la pluralité d'unités de rail de guidage comporte un seul moyen de serrage.

37. Procédé d'ajustement d'un guide de convoyeur (10) comprenant une unité de rail de guidage (14) comprenant un élément de guidage (16, 18) agencé pour définir un côté d'un canal (20) à travers lequel un article peut être transporté, le procédé comprenant la modification de la position de l'élément de guidage d'une première position vers une deuxième position d'une pluralité de positions discrètes par rapport à l'unité de rail de guidage dans son ensemble, ajustant de ce fait la largeur du canal ; et **caractérisé en ce que** l'unité de rail de guidage comprend un croisillon rotatif (42) monté sur un arbre (52), le croisillon comportant une pluralité de pattes (48) de différentes longueurs par rapport à l'arbre, et l'élément de guidage comportant une fente (60) dimensionnée et positionnée pour recevoir une patte du croisillon, le procédé comprenant en outre les étapes consistant à : (i) déplacer l'élément de guidage pour désengager la patte du croisillon de la fente ; (ii) faire tourner le croisillon pour présenter une patte différente à la fente ; et (iii) déplacer l'élément de guidage de retour en position de sorte que la patte différente est reçue dans la fente.
